(19) Europäisches Patentamt
European Patent Office
Office européen des brevets

(11) EP 2 507 598 B1

# (12) FASCICULE DE BREVET EUROPEEN

(45) Date de publication et mention de la délivrance du brevet:
**14.08.2019 Bulletin 2019/33**

(21) Numéro de dépôt: **10799088.9**

(22) Date de dépôt: **22.11.2010**

(51) Int Cl.:
***G01H 1/00*** *(2006.01)*

(86) Numéro de dépôt international:
**PCT/FR2010/052467**

(87) Numéro de publication internationale:
**WO 2011/064490 (03.06.2011 Gazette 2011/22)**

## (54) PROCÉDÉ ET DISPOSITIF DE SURVEILLANCE DE VIBRATIONS EN TORSION D'UN ARBRE ROTATIF D'UNE TURBOMACHINE

VERFAHREN UND VORRICHTUNG ZUR ÜBERWACHUNG VON DREHSCHWINGUNGEN EINER RADIALWELLEN EINES TURBOMOTORS

METHOD AND DEVICE FOR MONITORING TORSIONAL VIBRATIONS OF A ROTARY SHAFT OF A TURBINE ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2009 FR 0958527**

(43) Date de publication de la demande:
**10.10.2012 Bulletin 2012/41**

(73) Titulaire: **Safran Aircraft Engines**
**75015 Paris (FR)**

(72) Inventeurs:
- **GEREZ, Valerio**
  **91330 Yerres (FR)**
- **GRIFFATON, Julien Christian Pascal**
  **75011 Paris (FR)**
- **JADCZAK, Edouard Joseph**
  **77350 Le Mee sur Seine (FR)**

(74) Mandataire: **Boura, Olivier et al**
**Cabinet Beau de Loménie**
**Tour Méditerrannée**
**65 avenue Jules Cantini**
**13006 Marseille (FR)**

(56) Documents cités:
**WO-A1-96/05486** **WO-A2-03/073050**
**US-A1- 2005 171 736** **US-A1- 2005 183 504**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

Arrière-plan de l'invention

La présente invention se rapporte au domaine général des turbomachines.

Elle concerne plus particulièrement la surveillance de turbomachines aéronautiques équipées d'arbre(s) rotatif(s), telles que par exemple un turboréacteur ou un turbopropulseur.

De façon connue, un arbre rotatif d'un turboréacteur, tel que par exemple un rotor basse-pression, est soumis à un effort statique de torsion.

En outre, des excitations spécifiques peuvent engendrer en dynamique des vibrations au niveau de l'arbre rotatif, à une fréquence particulière aussi appelée fréquence de torsion de l'arbre. Cette fréquence particulière caractérise le premier mode de torsion de l'arbre. A titre d'exemple, pour un rotor basse-pression d'un turboréacteur, cette fréquence est basse par rapport à la fréquence de rotation du rotor.

Ainsi, il peut arriver que l'injection pulsée de carburant dans le turboréacteur entre en résonance avec ce premier mode de torsion de l'arbre du turboréacteur. En fonction de l'amplitude de cette résonance, il s'ensuit un bruit en cabine, voire un risque de cassure de l'arbre en fatigue vibratoire.

Il est donc nécessaire de surveiller les vibrations en torsion des arbres rotatifs du turboréacteur, afin de prévenir de tels inconvénients.

Le document WO 96/05486 décrit un procédé et un dispositif pour détecter des défauts et analyser des composants en rotation dans des machines rotatives.

Objet et résumé de l'invention

Un but de l'invention est donc de proposer un procédé fiable de surveillance des vibrations en torsion d'un arbre rotatif d'une turbomachine, utilisant des signaux issus de capteurs déjà présents dans la turbomachine.

Ce but est atteint grâce à un procédé de surveillance de vibrations en torsion d'un arbre rotatif d'une turbomachine selon la revendication 1.

Corrélativement, l'invention vise également un dispositif de surveillance de vibrations en torsion d'un arbre rotatif d'une turbomachine selon la revendication 7.

L'invention s'applique notamment, de façon privilégiée mais non limitative, à la surveillance de vibrations en torsion basse fréquence d'un arbre rotatif de turbomachine. On entend ici par basse fréquence, une fréquence largement inférieure à la fréquence de rotation de l'arbre rotatif surveillé, telle que par exemple une fréquence de torsion égale à 30% de la fréquence de rotation de l'arbre.

L'invention permet avantageusement d'utiliser des signaux issus de capteurs déjà présents dans la turbomachine, à savoir des capteurs vibratoires tels que des accéléromètres, des jauges, des microphones, etc., pour surveiller les vibrations en torsion auxquelles sont sujets les arbres en rotation de cette turbomachine. Un traitement approprié de ces signaux permet d'émettre un message d'alerte en cas de vibrations d'amplitudes trop importantes et le cas échéant, de proposer une maintenance adaptée afin de limiter le bruit en cabine, voire de prévenir une rupture de l'arbre rotatif.

Les inventeurs ont en effet astucieusement constaté, qu'en présence de balourd sur l'arbre rotatif, l'observation et l'analyse de signaux vibratoires d'accélération issus de capteurs localisés sur des composants fixes de la turbomachine, permettent, de façon simple et fiable, d'identifier la présence de vibrations en torsion d'amplitudes prédéfinies. Or, en pratique, quand bien même des efforts sont réalisés pour supprimer le balourd affectant l'arbre rotatif, ces efforts ne permettent pas de s'affranchir complètement de celui-ci. Autrement dit, les arbres rotatifs ne sont jamais parfaitement équilibrés, et la surveillance selon l'invention est toujours possible.

Le procédé de surveillance selon l'invention présente l'avantage de pouvoir être mis en oeuvre en temps réel ou légèrement différé, par exemple dans un dispositif de surveillance embarqué à bord de l'aéronef équipé de la turbomachine. Ce dispositif de surveillance peut notamment être intégré à la turbomachine, et plus précisément au dispositif de surveillance de la turbomachine, aussi connu sous le nom d'EMU (Engine Monitoring Unit).

En variante, le dispositif de surveillance peut être placé au banc et sous l'aile de l'aéronef, dans des outillages spécifiquement dédiés à la surveillance de la turbomachine.

Dans une autre variante encore, le procédé de surveillance peut être implémenté dans un dispositif au sol dédié à la surveillance de la turbomachine.

On notera que le procédé selon l'invention peut aisément être combiné à d'autres procédés de détection afin d'augmenter la fiabilité de la détection, et ainsi d'améliorer le diagnostic de maintenance délivré à l'utilisateur final de la turbomachine.

La principale source de balourd dans une turbomachine est la soufflante. Toutefois il est courant que la turbine elle-même de la turbomachine introduise également un balourd. Dans ce cas, on se trouve en présence de balourds combinés, oscillant en opposition de phase.

Dans un mode particulier de réalisation, l'invention s'appuie avantageusement sur cette constatation pour associer au message d'alerte un niveau de confiance. A cette fin, le procédé de surveillance comprend en outre :

- une étape d'évaluation d'un signal d'enveloppe du signal vibratoire ;
- une étape d'évaluation d'un spectre fréquentiel de ce signal d'enveloppe ;
- une étape de recherche d'au moins une raie spectrale dans le spectre du signal d'enveloppe d'amplitude supérieure à un deuxième seuil, à un multiple de la fréquence de torsion de l'arbre ; et
- une étape d'estimation d'un niveau de confiance associé au message d'alerte, en fonction du résultat de l'étape de recherche.

Corrélativement, dans ce mode de réalisation, le dispositif de surveillance peut comprendre en outre :

- des moyens d'évaluation d'un signal d'enveloppe du signal vibratoire ;
- des moyens d'évaluation d'un spectre fréquentiel de ce signal d'enveloppe ;
- des moyens de recherche d'au moins une raie spectrale dans le spectre du signal d'enveloppe d'amplitude supérieure à un deuxième seuil, à un multiple de la fréquence de torsion de l'arbre ; et
- des moyens d'estimation, en fonction du résultat de cette recherche, d'un niveau de confiance associé au message d'alerte.

Le signal d'enveloppe est obtenu par exemple à partir du signal résultant de l'application d'une transformée de Hilbert sur le signal vibratoire.

Ainsi, préférentiellement, dans ce mode particulier de réalisation, on attribuera un niveau de confiance plus élevé au message d'alerte lorsqu'une raie d'amplitude supérieure au deuxième seuil aura été identifiée dans le spectre du signal d'enveloppe à un multiple de la fréquence de torsion de l'arbre. La détection de telles raies permet donc de confirmer l'alerte émise concernant les vibrations en torsion de l'arbre rotatif.

On notera toutefois que l'absence de raies dans le spectre d'enveloppe n'invalide pas pour autant l'alerte émise en cas de dépassement du premier seuil par les raies spectrales du spectre du signal vibratoire.

Dans un mode particulier de réalisation, le procédé de surveillance comprend en outre :

- une étape de recherche d'au moins une autre paire de raies spectrales réparties dans le spectre du signal vibratoire autour de la fréquence porteuse, et espacées de celle-ci d'un multiple de la fréquence de torsion de l'arbre ; et
- une étape d'estimation d'un niveau de sévérité associé au message d'alerte, ce niveau de sévérité dépendant du nombre de paires de raies trouvées à l'étape de recherche précédente, et dont les amplitudes dépassent au moins un troisième seuil.

Corrélativement, dans ce mode de réalisation, le dispositif de surveillance peut comprendre en outre :

- des moyens de recherche d'au moins une autre paire de raies spectrales réparties dans le spectre du signal vibratoire autour de la fréquence porteuse, et espacées de celle-ci d'un multiple de la fréquence de torsion de l'arbre ; et
- des moyens d'estimation d'un niveau de sévérité associé au message d'alerte, ce niveau de sévérité dépendant du nombre de paires trouvées par les moyens de recherche, et dont les amplitudes dépassent au moins un troisième seuil.

Selon un autre aspect, l'invention vise également une turbomachine comprenant :

- un dispositif de surveillance conforme à l'invention ; et
- un capteur vibratoire localisé sur un composant fixe de la turbomachine et adapté à fournir au dispositif de surveillance un signal vibratoire d'accélération.

Une telle turbomachine est par exemple un turboréacteur.

Dans un mode particulier de réalisation, les différentes étapes du procédé de surveillance sont déterminées par des instructions de programmes d'ordinateurs.

En conséquence, l'invention vise aussi un programme d'ordinateur sur un support d'informations, ce programme étant susceptible d'être mis en oeuvre dans un dispositif de surveillance ou plus généralement dans un ordinateur, ce programme comportant des instructions adaptées à la mise en oeuvre des étapes d'un procédé de surveillance tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

## Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente schématiquement un dispositif de surveillance conforme à l'invention, dans un mode particulier de réalisation ;
- la figure 2 représente schématiquement une modélisation, telle que proposée dans l'invention, d'un balourd dans le plan de la soufflante et d'un balourd dans le plan de la turbine affectant un arbre rotatif d'un turboréacteur ;
- les figures 3A et 3B représentent, sous forme d'organigrammes, les principales étapes d'un procédé de surveillance conforme à l'invention, lorsque celui-ci est mis en oeuvre par le dispositif de surveillance de la figure 1, dans un mode particulier de réalisation ;
- les figures 4A-4C illustrent des exemples de signaux vibratoires x(t) ;
- les figures 5A-5C illustrent respectivement les spectres fréquentiels des signaux vibratoires représentés sur les figures 4A-4C ;
- la figure 6 illustre le spectre d'enveloppe du signal vibratoire représenté sur la figure 4C.

## Description détaillée d'un mode de réalisation

L'invention envisage la surveillance d'une turbomachine et plus précisément des vibrations en torsion auxquelles est soumis un arbre rotatif de cette turbomachine, lors de son fonctionnement.

Le principe sur lequel se base avantageusement l'invention est qu'une vibration en torsion d'un arbre rotatif d'une turbomachine autour de son régime de fonctionnement génère, en présence de balourd(s) sur le rotor qui lui est associé, une modulation de fréquence et éventuellement d'amplitude sur les signaux vibratoires délivrés par des capteurs vibratoires placés sur des éléments fixes de la turbomachine. Ainsi, l'invention utilise le fait qu'en observant et en analysant ces signaux vibratoires, il est possible d'identifier une vibration en torsion d'amplitude trop importante.

Comme mentionné précédemment, en pratique, il est impossible de parfaitement équilibrer les arbres rotatifs d'une turbomachine, de sorte que ces arbres sont toujours affectés par un balourd. Il n'existe donc pas d'obstacle à proprement parler à la mise en oeuvre de l'invention.

Dans une turbomachine, la principale source de balourd est la soufflante. Toutefois, il est courant que la turbine introduise également un balourd, oscillant en opposition de phase avec le balourd se trouvant dans le plan de la soufflante. L'invention s'applique avantageusement dans ces deux cas de figure.

On se réfère maintenant à la figure 1 qui représente, dans son environnement, un dispositif de surveillance 1 conforme à l'invention, dans un mode particulier de réalisation.

Dans ce mode particulier de réalisation, on envisage la surveillance d'un arbre rotatif basse pression ABP (figure 2) d'un turboréacteur TR, conforme à l'invention, équipant un aéronef (non représenté). Toutefois, ces hypothèses ne sont pas limitatives, et l'invention s'applique également à d'autres turbomachines, telles que par exemple à un turbopropulseur.

Dans le mode de réalisation décrit ici, le dispositif de surveillance 1 est embarqué à bord de l'aéronef et est intégré au dispositif 2 de surveillance de l'aéronef ou EMU.

En variante, le dispositif de surveillance selon l'invention peut être placé au banc et sous l'aile de l'aéronef, dans des outillages spécifiquement dédiés à la surveillance du turboréacteur TR, ou être implémenté dans un dispositif au sol dédié à la surveillance du turboréacteur.

De façon connue en soi, le turboréacteur TR est doté d'une pluralité de capteurs 3 de fonctionnement, tels que par exemple des capteurs de position, de vitesse, de température, de pression, des capteurs vibratoires, etc. Ces capteurs sont adaptés à fournir à l'EMU 2 diverses mesures, afin qu'elle puisse surveiller le fonctionnement du turboréacteur TR.

Parmi ces capteurs, se trouve notamment un accéléromètre 3A, placé sur un composant fixe du turboréacteur TR (par exemple au niveau de l'un des paliers de l'arbre rotatif ABP). Un tel capteur est couramment utilisé dans les turboréacteurs, ou de façon plus générale dans les turbomachines, et ne sera pas décrit plus en détails ici.

Classiquement, l'accéléromètre 3A est adapté à fournir un signal électrique ou signal vibratoire d'accélération à l'instant t, noté x(t), dont l'intensité est proportionnelle à l'accélération mesurée. Ce signal électrique résulte ici des accélérations imposées au composant fixe sur lequel est placé l'accéléromètre 3A, du fait de la présence de balourd(s) sur l'arbre rotatif basse pression du turboréacteur TR, lorsque celui-ci est en fonctionnement. Il est fourni à l'EMU 2, et plus particulièrement au dispositif de surveillance 1.

On notera, qu'en variante, d'autres capteurs vibratoires peuvent être utilisés pour fournir un signal vibratoire proportionnel à une accélération à l'EMU 2, tels que par exemple un microphone ou une jauge. Au sens de l'invention, on considère qu'un tel signal constitue un signal vibratoire d'accélération.

Le dispositif de surveillance 1 a ici l'architecture matérielle d'un ordinateur.

Il comporte notamment un processeur 11, une mémoire vive 12, une mémoire morte 13, et des moyens 14 pour communiquer avec des équipements embarqués dans l'aéronef, tels que par exemple avec l'accéléromètre 3A. De façon connue, ces équipements et le dispositif de surveillance 1 selon l'invention communiquent entre eux par l'intermédiaire de lignes ou de bus de données numériques équipant l'aéronef, connus de l'homme du métier.

Le dispositif de surveillance 1 comprend en outre des moyens de communication 15 avec un serveur de l'exploitant de l'aéronef (non représenté), par exemple via un système ACARS.

La mémoire morte 13 comprend un programme informatique, conforme à l'invention, adapté à exécuter les principales étapes du procédé de surveillance selon l'invention, décrites maintenant en référence aux figures 2 à 6.

On suppose ici que l'arbre rotatif basse pression ABP surveillé présente un balourd dans le plan de la soufflante combiné à un balourd dans le plan de la turbine du turboréacteur TR. Sous l'effet de la torsion de l'arbre, ces balourds oscillent en opposition de phase.

La figure 2 représente une modélisation sous forme vectorielle de ces balourds, notés respectivement $\vec{B}_F$ et $\vec{B}_T$, dans le plan de la soufflante et dans le plan de la turbine.

Compte-tenu de cette modélisation, le signal vibratoire x(t), délivré par l'accéléromètre 3A à l'instant t, peut être écrit sous la forme suivante :

$$x(t) = F\sin(\Omega_p t + \varphi_F + \theta_{mF}\sin(\Omega_m t)) + T\sin(\Omega_p t + \varphi_T + \theta_{mT}\sin(\Omega_m t + \pi))$$

où :

- $\Omega_p$ désigne la pulsation porteuse du signal vibratoire x(t), représentative du régime de l'arbre rotatif. On notera que :

$$\Omega_p = 2\pi F_p$$

  où $F_p$ désigne la fréquence porteuse du signal vibratoire ;
- $\Omega_m$, désigne la pulsation de torsion de l'arbre rotatif. On notera que :

$$\Omega_m = 2\pi F_m$$

  où $F_m$ désigne la fréquence de torsion de l'arbre rotatif. Cette fréquence de torsion est connue et dépend des caractéristiques de l'arbre rotatif ;
- $\theta_{mF}$ et $\theta_{mT}$ désignent l'amplitude de la vibration de la torsion, respectivement dans le plan de la soufflante et dans le plan de la turbine ;
- F et T représentent l'amplitude crête du signal vibratoire x(t) délivré par l'accéléromètre. L'amplitude F est une fonction du vecteur de balourd $\vec{B}_F$ dans le plan de la soufflante et de la réponse de la structure au balourd. L'amplitude T est une fonction du vecteur de balourd $\vec{B}_T$ dans le plan de la turbine et de la réponse de la structure au balourd ;
- $\varphi_F$ désigne le déphasage correspondant à la position angulaire du vecteur de balourd $\vec{B}_F$ dans le plan de la soufflante par rapport à un angle de référence ; et

- $\varphi_T$ désigne le déphasage correspondant à la position angulaire du balourd $\vec{B}_T$ dans le plan de la turbine par rapport à cet angle de référence.

Nous allons maintenant détailler, en référence aux figures 3A et 3B, les principales étapes du procédé de surveillance selon l'invention, dans un mode particulier de réalisation.

Dans le mode de réalisation envisagé ici, le procédé de surveillance se décompose en deux phases :

- une première phase P1 (représentée sur la figure 3A), au cours de laquelle on détecte la présence de vibrations en torsion de l'arbre rotatif ABP, et le cas échéant, on surveille l'amplitude de ces vibrations et on évalue leur sévérité ; et
- une seconde phase P2 (représentée sur la figure 3B), mise en oeuvre ici seulement si une vibration en torsion d'amplitude trop élevée a été détectée lors de la phase P1, et au cours de laquelle on associe un niveau de confiance à cette détection.

Ainsi, au cours de la phase P1, le signal vibratoire d'accélération x(t) issu du capteur 3A est fourni en continu, via les moyens de communication 14, au dispositif de surveillance 1 et stocké dans la mémoire vive 12 (étape E10).

A titre indicatif, les figures 4A à 4C illustrent l'allure du signal x(t) sur des exemples :

- la figure 4A représente un signal x(t) obtenu lorsque le balourd dans le plan turbine est nul ou quasi-nul (i.e. $T\approx 0$), et pour des vibrations en torsion de faible d'amplitude (de l'ordre de quelques degrés ici) ;
- la figure 4B représente un signal x(t) obtenu lorsque le balourd dans le plan turbine est nul ou quasi-nul (i.e. $T\approx 0$), pour des vibrations en torsion d'amplitudes importantes ; et
- la figure 4C représente un signal x(t) obtenu en présence d'un balourd dans le plan turbine et d'un balourd dans le plan de la soufflante.

Comme le montrent ces figures, le signal x(t) n'est pas sinusoïdal, mais présente des dissymétries sur sa fréquence porteuse $F_p$.

Ces dissymétries se caractérisent par l'existence de paires de raies latérales dans le spectre de fréquence du signal x(t), réparties de façon symétrique autour de la raie fondamentale $R_0$ liée au(x) balourd(s), et d'amplitudes plus ou moins importantes.

L'analyse de la quantité et de l'amplitude de ces raies latérales présentes dans le spectre de fréquence du signal x(t), va permettre, conformément à l'invention, d'identifier la présence d'une vibration en torsion d'amplitude trop élevée et de déterminer la sévérité du phénomène ainsi identifié.

Ainsi, le spectre fréquentiel du signal x(t) stocké dans la mémoire 12 est évalué (étape E20). Ce spectre fréquentiel est noté X(f) où f désigne la fréquence. Dans l'exemple décrit, X(f) est obtenu en évaluant la transformée de Fourier du signal x(t) pris sur une fenêtre temporelle notée W, de longueur prédéterminée. L'obtention du spectre fréquentiel d'un signal temporel est connue en soi et ne sera pas détaillée davantage ici.

A titre d'exemples, les figures 5A, 5B et 5C représentent les spectres X(f) des signaux x(t) illustrés respectivement sur les figures 4A, 4B et 4C.

On peut noter sur ces spectres la présence de paires de raies latérales, se trouvant de part et d'autre de la raie fondamentale située à la fréquence porteuse $F_p$, et espacées de la fréquence de torsion $F_m$. Ces paires de raies ont des amplitudes variables. On désignera par $R_i$ et $R_{-i}$ la paire de raies spectrales présentes aux fréquences $F_i$ et $F_{-i}$ vérifiant :

$$F_i = F_p + i \times F_m \text{ et } F_{-i} = F_p - i \times F_m$$

où i désigne un entier.

Conformément à l'invention, on recherche dans un premier temps la présence d'une première paire de raies latérales, situées aux fréquences $\pm F_m$ autour de la raie fondamentale $R_0$ (étape E30).

Cette recherche est effectuée selon des techniques connues de l'homme du métier. Par exemple, on compare, par rapport à un seuil représentatif d'un niveau de bruit, les valeurs prises par le spectre X(f) dans un intervalle prédéterminé sélectionné autour des fréquences $\pm F_m$.

Si la recherche ne permet pas de détecter de raie aux fréquences $\pm F_m$, on en déduit que le premier mode de torsion de l'arbre n'est pas excité. De ce fait, aucune alerte n'est levée (étape E50). Une nouvelle fenêtre W du signal vibratoire x(t) est alors sélectionnée et les étapes E20 et E30 sont réitérées sur cette nouvelle fenêtre.

Au contraire, si une première paire de raies latérales $R_1$ et $R_{-1}$ est détectée aux fréquences $\pm F_m$ durant l'étape

de recherche, on détermine alors dans un second temps, l'amplitude de ces raies. Celle-ci est donnée par les valeurs des raies dans le spectre X(f).

Puis, les amplitudes relatives de la première paire de raies R1 et $R_{-1}$ ainsi déterminées sont chacune comparées à un seuil prédéfini $S1_1$ (étape E40). On entend ici par amplitude relative le rapport de l'amplitude de la raie considérée sur l'amplitude de la raie fondamentale $R_0$.

En variante, il est également possible de comparer directement les amplitudes « absolues » des raies $R_1$ et $R_{-1}$ avec un seuil prédéfini.

Le seuil $S1_1$ constitue un premier seuil au sens de l'invention. Il est prédéfini et représentatif ici de l'amplitude relative des raies latérales au-delà de laquelle une vibration en torsion est préoccupante et nécessite la levée d'une alerte, voire la planification d'une opération de maintenance. Ce seuil est déterminé de façon expérimentale.

On notera, que dans une variante de réalisation, les étapes E30 et E40 peuvent être mises en oeuvre simultanément, en recherchant la première paire de raies directement avec le seuil $S1_1$.

Si au moins une amplitude relative des raies $R_1$ et/ou $R_{-1}$ est inférieure au seuil $S1_1$, on considère qu'il n'y a pas lieu d'émettre une alerte (étape E50) : une nouvelle fenêtre W du signal vibratoire x(t) est alors sélectionnée et les étapes E20 à E40 sont réitérées sur cette nouvelle fenêtre.

Si au contraire, les deux amplitudes relatives des raies $R_1$ et $R_{-1}$ sont chacune supérieures au premier seuil $S1_1$, l'émission d'un message d'alerte M est décidée (étape E60).

Dans le mode de réalisation décrit ici, ce message d'alerte M est associé à deux informations complémentaires caractérisant l'alerte, à savoir d'une part, un niveau de sévérité de l'alerte et d'autre part, un niveau de confiance de l'alerte.

Dans une variante de réalisation, le message d'alerte M n'est associé qu'à l'une ou l'autre de ces informations.

Dans une autre variante de réalisation, le message d'alerte M est envoyé dès la détection d'un dépassement du premier seuil par les amplitudes des raies $R_1$ et $R_{-1}$, sans être associé à ces informations.

Pour évaluer le niveau de sévérité de l'alerte, on recherche, dans le spectre du signal x(t), si d'autres paires de raies latérales (ex. $R_2/R_{-2}$, $R_3/R_{-3}$, etc.) sont présentes autour de la raie fondamentale $R_0$, à des multiples de la fréquence de torsion de l'arbre ABP, et on détermine les amplitudes de ces paires de raies (étape E70).

Seules les raies dont l'amplitude est supérieure à un niveau de bruit prédéterminé sont considérées.

Les amplitudes relatives de ces raies sont alors comparées respectivement à des seuils prédéterminés (troisièmes seuils au sens de l'invention) (étape E80).

Par exemple, en référence à la figure 4A, on compare les amplitudes relatives des raies $R_2$ et $R_{-2}$ à un seuil $S1_2$. Le seuil $S1_2$ est choisi distinct du seuil $S1_1$.

En variante, les seuils $S1_1$ et $S1_2$ peuvent être identiques. On notera par ailleurs, que les amplitudes respectives de chaque raie d'une paire de raies peuvent également être comparées à des seuils différents.

A la suite de cette comparaison, le dispositif de surveillance 1 évalue le nombre N de paires de raies latérales, réparties de façon symétrique autour de la raie fondamentale $R_0$ à des multiples de la fréquence de torsion de l'arbre, et dont les amplitudes dépassent les troisièmes seuils (étape E90).

Ce nombre N constitue une estimation du niveau de sévérité de l'alerte au sens de l'invention : plus N est élevé, plus le phénomène de vibration en torsion auquel est soumis l'arbre ABP est considéré comme sévère.

On suppose dans l'exemple de la figure 4A, que ce nombre est égal à 2, et inclut la paire de raies à $\pm F_m$ et la paire de raies à $\pm 2F_m$.

Le nombre N est alors inséré dans un champ prédéterminé du message M.

A la suite de cette première phase P1, une seconde phase P2 est mise en oeuvre afin d'associer au message d'alerte M un niveau de confiance (figure 3B).

A cette fin, dans le mode de réalisation décrit ici, on recherche dans le signal x(t) la présence d'une caractéristique qui viendrait conforter l'alerte identifiée au cours de la phase P1, à savoir la présence d'une modulation d'amplitude dans le signal x(t).

La figure 4C illustre un exemple de signal x(t) sur lequel on observe non seulement des dissymétries sur la fréquence porteuse $F_p$ mais également la présence d'une modulation d'amplitude.

Ainsi, au cours de la phase P2, le dispositif de surveillance 1 génère un signal d'enveloppe x'(t) à partir du signal temporel x(t) (étape E100).

Pour ce faire, il évalue tout d'abord la transformée de Hilbert $\tilde{x}(t)$ du signal x(t). Le calcul de la transformée de Hilbert d'un signal temporel est connu en soi et ne sera pas détaillé davantage ici.

Le signal d'enveloppe x'(t) à l'instant t du signal x(t) est alors obtenu à l'aide de l'équation suivante :

$$x'(t) = \sqrt{x^2(t) + \tilde{x}^2(t)}$$

On notera que la fréquence du signal d'enveloppe x'(t) est la fréquence de torsion $F_m$ de l'arbre rotatif.

Le spectre du signal d'enveloppe x'(t), noté X'(f) où f désigne la fréquence, est alors évalué par le dispositif de surveillance, à l'aide d'une transformée de Fourier, comme décrit précédemment pour le spectre X(f) (étape E110).

La figure 6 représente le spectre du signal d'enveloppe x'(t) correspondant au signal x(t) illustré sur la figure 4C. Une raie spectrale fondamentale R'1 à la fréquence de torsion $F_m$, ainsi qu'une harmonique $R'_2$ à la fréquence $2F_m$, peuvent être identifiées dans le spectre.

On notera que plus généralement, la présence d'une modulation d'amplitude se manifeste par la présence dans le spectre du signal d'enveloppe, d'une raie spectrale $R'_1$ dite fondamentale à la fréquence de torsion $F_m$ de l'arbre, et éventuellement d'harmoniques $R'_i$ à des multiples $F'_i$ de la fréquence de torsion telles que :

$$F'_i = i \times F_m,$$

où i désigne un entier supérieur à 1.

A partir du spectre X'(f), on recherche donc s'il existe une raie spectrale R'1 présente dans le signal X'(f) à la fréquence de torsion $F_m$ de l'arbre (étape E120). Cette recherche est réalisée de façon similaire à l'étape de recherche E30.

Si aucune raie n'est détectée (autrement dit aucune modulation d'amplitude n'est détectée dans le signal vibratoire x(t)), un niveau de confiance médian est associé par défaut au message d'alerte M (étape E130). Dans l'exemple décrit ici, ce niveau de confiance médian est reflété par un indicateur positionné à la valeur « médian », et inclus dans un champ prédéterminé du message M.

Si une raie R'1 est détectée, on détermine son amplitude : celle-ci est donnée par la valeur de la raie dans le spectre X'(f).

Puis l'amplitude ainsi déterminée est comparée à un seuil S2 prédéfini (étape E140), obtenu de façon expérimentale. Le seuil S2 est un deuxième seuil au sens de l'invention.

Comme décrit précédemment en référence aux étapes E30 et E40, dans une variante de réalisation, les étapes E120 et E140 peuvent être réalisées simultanément, en recherchant une raie dans le signal X'(f) à la fréquence de torsion $F_m$ directement avec le seuil S2. Si l'amplitude de la raie $R'_1$ est supérieure au seuil S2, alors un niveau de confiance élevé est associé au message d'alerte M (étape E150). Dans l'exemple décrit ici, ce niveau de confiance élevé est reflété par un indicateur positionné à la valeur « élevé », inclus dans un champ prédéterminé du message M.

Sinon, un niveau de confiance médian (i.e. indicateur positionné à la valeur « médian ») est associé au message d'alerte M et inclus dans le champ approprié du message (étape E130).

En d'autres mots, un niveau de confiance élevé au sens de l'invention vient confirmer la détection d'une vibration en torsion d'amplitude trop importante réalisée à la phase P1. Pour autant, un niveau de confiance médian ne présumera pas de l'absence de validité de cette détection.

Bien entendu, un nombre différent de raies peut être considéré pour estimer le niveau de confiance. Par exemple, on peut observer la raie située à la fréquence de torsion ainsi qu'une ou plusieurs harmoniques, et adapter le niveau de confiance en conséquence.

On notera que les deux phases P1 (étapes E10 à E90) et P2 (étapes E100 à E150) peuvent être indifféremment menées simultanément ou au contraire successivement (dans un ordre quelconque).

A l'issue des étapes E130 et E150, le dispositif de surveillance 1 émet le message d'alerte M (étape E160). Ce message d'alerte contient ici le niveau de confiance et le niveau de sévérité estimés respectivement aux étapes E130/E150 et E90.

Ce message M est par exemple envoyé par les moyens 14 au pilote de l'aéronef, afin qu'il puisse adapter le régime de fonctionnement du turboréacteur TR.

En variante, le message M peut être envoyé par les moyens 15 au serveur de l'exploitant de l'aéronef, et contenir une invitation à effectuer une opération de maintenance sur le turboréacteur TR.

Dans une autre variante de réalisation de l'invention, le niveau de confiance associé au message d'alerte M peut être consolidé, avant l'émission du message M, avec des diagnostics issus d'autres algorithmes de surveillance implémentés sur le turboréacteur.

## Revendications

**1.** Procédé de surveillance de vibrations en torsion d'un arbre rotatif (ABP) d'une turbomachine (TR) comprenant :

- une étape d'obtention (E10) d'un signal vibratoire d'accélération issu d'un capteur (3A) localisé sur un composant fixe de la turbomachine, ce signal vibratoire étant **caractérisé par** une fréquence porteuse ;
- une étape d'évaluation (E20) d'un spectre fréquentiel de ce signal vibratoire ;
- une étape de recherche (E30,E40) d'une paire de raies spectrales d'amplitudes supérieures à au moins un premier seuil, réparties dans le spectre autour de la fréquence porteuse du signal vibratoire et espacées de celle-ci d'une fréquence de torsion de l'arbre ; et
- si une paire de raies spectrales d'amplitudes supérieures à audit au moins un premier seuil est détectée, une étape d'émission (E160) d'un message d'alerte.

**2.** Procédé de surveillance selon la revendication 1 comprenant en outre :

- une étape d'évaluation (E100) d'un signal d'enveloppe du signal vibratoire ;
- une étape d'évaluation (E110) d'un spectre fréquentiel de ce signal d'enveloppe ;
- une étape de recherche (E120) d'au moins une raie spectrale dans le spectre du signal d'enveloppe d'amplitude supérieure à un deuxième seuil, à un multiple de la fréquence de torsion de l'arbre ; et
- une étape d'estimation (E130,E150) d'un niveau de confiance associé au message d'alerte, en fonction du résultat de l'étape de recherche (E120).

**3.** Procédé de surveillance selon la revendication 2, **caractérisé en ce qu'**au cours de l'étape d'évaluation du signal d'enveloppe, on obtient le signal d'enveloppe à partir d'une transformée de Hilbert du signal vibratoire.

**4.** Procédé de surveillance selon l'une quelconque des revendications 1 à 3, comprenant en outre :

- une étape de recherche (E70) d'au moins une autre paire de raies spectrales réparties dans le spectre du signal vibratoire autour de la fréquence porteuse, et espacées de celle-ci d'un multiple de la fréquence de torsion de l'arbre ; et
- une étape d'estimation (E90) d'un niveau de sévérité associé au message d'alerte, ce niveau de sévérité dépendant du nombre de paires de raies trouvées à l'étape de recherche (E70), et dont les amplitudes dépassent au moins un troisième seuil.

**5.** Programme d'ordinateur comportant des instructions pour l'exécution des étapes d'un procédé de surveillance selon l'une quelconque des revendications 1 à 4 lorsque ledit programme est exécuté par un ordinateur.

**6.** Support d'enregistrement lisible par un ordinateur sur lequel est enregistré un programme d'ordinateur comprenant des instructions pour l'exécution des étapes d'un procédé de surveillance selon l'une quelconque des revendications 1 à 4.

**7.** Dispositif de surveillance (1) de vibrations en torsion d'un arbre rotatif (ABP) d'une turbomachine (TR), comprenant :

- des moyens d'obtention (11,14) d'un signal vibratoire d'accélération issu d'un capteur (3A) localisé sur un composant fixe de la turbomachine, ce signal vibratoire étant **caractérisé par** une fréquence porteuse ;
- des moyens d'évaluation (11) d'un spectre fréquentiel de ce signal vibratoire ;
- des moyens de recherche (11) d'une paire de raies spectrales d'amplitudes supérieures à au moins un premier seuil, réparties dans le spectre autour de la fréquence porteuse du signal vibratoire et espacées de celle-ci d'une fréquence de torsion de l'arbre ; et
- des moyens d'émission (14,15) d'un message d'alerte activés si une paire de raies spectrales d'amplitudes supérieures à audit au moins un premier seuil est détectée.

**8.** Dispositif de surveillance (1) selon la revendication 7 comprenant en outre :

- des moyens d'évaluation (11) d'un signal d'enveloppe du signal vibratoire ;
- des moyens d'évaluation (11) d'un spectre fréquentiel de ce signal d'enveloppe ;
- des moyens de recherche (11) d'au moins une raie spectrale dans le spectre du signal d'enveloppe d'amplitude supérieure à un deuxième seuil, à un multiple de la fréquence de torsion de l'arbre ; et
- des moyens d'estimation (11) d'un niveau de confiance associé au message d'alerte, en fonction du résultat de cette recherche.

**9.** Dispositif de surveillance (1) selon la revendication 7 ou 8 comprenant en outre :

- des moyens de recherche d'au moins une autre paire de raies spectrales réparties dans le spectre du signal vibratoire autour de la fréquence porteuse, et espacées de celle-ci d'un multiple de la fréquence de torsion de l'arbre ; et

- des moyens d'estimation (11) d'un niveau de sévérité associé au message d'alerte, ce niveau de sévérité dépendant du nombre de paires trouvées par les moyens de recherche, et dont les amplitudes dépassent au moins un troisième seuil.

**10.** Turbomachine (TR) comprenant :

- un dispositif de surveillance (1) selon l'une quelconque des revendications 7 à 9 ; et
- un capteur vibratoire (3A) localisé sur un composant fixe de la turbomachine et adapté à fournir au dispositif de surveillance un signal vibratoire d'accélération.

**Patentansprüche**

**1.** Verfahren zur Überwachung der Torsionsschwingungen einer drehenden Welle (ABP) einer Turbomaschine (TR), umfassend:

- einen Schritt des Erhaltens (E10) eines Schwingungsbeschleunigungssignals, das von einem Sensor (3A) ausgegeben wird, der sich an einer feststehenden Komponente der Turbomaschine befindet, wobei dieses Schwingungssignal durch eine Trägerfrequenz gekennzeichnet ist,
- einen Schritt des Bewertens (E20) eines Frequenzspektrums dieses Schwingungssignals,
- einen Schritt des Suchens (E30, E40) eines Paars von Spektrallinien mit Amplituden, die größer als zumindest eine erste Schwelle sind, die in dem Spektrum um die Trägerfrequenz des Schwingungssignals herum verteilt und von dieser um eine Torsionsfrequenz der Welle beabstandet sind, und
- einen Schritt des Übertragens (E160) einer Alarmmeldung, wenn ein Paar von Spektrallinien mit Amplituden, die größer als die zumindest eine erste Schwelle sind, erfasst wird.

**2.** Verfahren zur Überwachung nach Anspruch 1, ferner umfassend:

- einen Schritt des Bewertens (E100) eines Hüllkurvensignals des Schwingungssignals,
- einen Schritt des Bewertens (E110) eines Frequenzspektrums dieses Hüllkurvensignals,
- einen Schritt des Suchens (E120) zumindest einer Spektrallinie in dem Spektrum des Hüllkurvensignals mit einer Amplitude, die größer als eine zweite Schwelle ist, bei einem Vielfachen der Torsionsfrequenz der Welle, und
- einen Schritt des Abschätzens (E130, E150) eines Konfidenzgrads in Verbindung mit der Alarmmeldung als Funktion des Ergebnisses des Schritts des Suchens (E120).

**3.** Verfahren zur Überwachung nach Anspruch 2, **dadurch gekennzeichnet, dass** im Verlauf des Schritts des Bewertens des Hüllkurvensignals das Hüllkurvensignal ausgehend von einer Hilbert-Transformation des Schwingungssignals erhalten wird.

**4.** Verfahren zur Überwachung nach einem der Ansprüche 1 bis 3, ferner umfassend:

- einen Schritt des Suchens (E70) zumindest eines weiteren Paars von Spektrallinien, die in dem Spektrum des Schwingungssignals um die Trägerfrequenz herum verteilt und von dieser um ein Vielfaches der Torsionsfrequenz der Welle beabstandet sind, und
- einen Schritt des Abschätzens (E90) eines Schweregrads in Verbindung mit der Alarmmeidung, wobei dieser Schweregrad von der Anzahl von Paaren von Linien abhängig ist, die in dem Schritt des Suchens (E70) gefunden wurden, und deren Amplituden zumindest eine dritte Schwelle überschreiten.

**5.** Computerprogramm umfassend Anweisungen zur Ausführung der Schritte eines Verfahrens zur Überwachung nach einem der Ansprüche 1 bis 4, wenn das Programm von einem Computer ausgeführt wird.

**6.** Computerlesbarer Datenträger, auf dem ein Computerprogramm umfassend Anweisungen zur Ausführung der Schritte eines Verfahrens zur Überwachung nach einem der Ansprüche 1 bis 4 gespeichert ist.

**7.** Vorrichtung (1) zum Überwachen der Torsionsschwingungen einer drehenden Welle (ABP) einer Turbomaschine (TR), umfassend:

- Mittel zum Erhalten (11,14) eines Schwingungsbeschleunigungssignals, das von einem Sensor (3A) ausgegeben wird, der sich an einer feststehenden Komponente der Turbomaschine befindet, wobei dieses Schwingungssignal durch eine Trägerfrequenz gekennzeichnet ist,
- Mittel zum Bewerten (11) eines Frequenzspektrums dieses Schwingungssignals,
- Mittel zum Suchen (11) eines Paars von Spektrallinien mit Amplituden, die größer als zumindest eine erste Schwelle sind, die in dem Spektrum um die Trägerfrequenz des Schwingungssignals herum verteilt und von dieser um eine Torsionsfrequenz der Welle beabstandet sind, und
- Mittel zum Übertragen (14, 15) einer Alarmmeldung, die aktiviert werden, wenn ein Paar von Spektrallinien mit Amplituden, die größer als die zumindest eine erste Schwelle sind, erfasst wird.

**8.** Vorrichtung (1) zum Überwachen nach Anspruch 7, ferner umfassend:

- Mittel zum Bewerten (11) eines Hüllkurvensignals des Schwingungssignals, Mittel zum Bewerten (11) eines Frequenzspektrums dieses Hüllkurvensignals,
- Mittel zum Suchen (11) zumindest einer Spektrallinie in dem Spektrum des Hüllkurvensignals mit einer Amplitude, die größer als eine zweite Schwelle ist, bei einem Vielfachen der Torsionsfrequenz der Welle, und
- Mittel zum Abschätzen (11) eines Konfidenzgrads in Verbindung mit der Alarmmeldung als Funktion des Ergebnisses dieses Suchens.

**9.** Vorrichtung (1) zum Überwachen nach Anspruch 7 oder 8, ferner umfassend:

- Mittel zum Suchen zumindest eines weiteren Paars von Spektrallinien, die in dem Spektrum des Schwingungssignals um die Trägerfrequenz herum verteilt und von dieser um ein Vielfaches der Torsionsfrequenz der Welle beabstandet sind, und
- Mittel zum Abschätzen (11) eines Schweregrads in Verbindung mit der Alarmmeldung, wobei dieser Schweregrad von der Anzahl von Paaren abhängig ist, die von den Mitteln zum Suchen gefunden wurden, und deren Amplituden zumindest eine dritte Schwelle überschreiten,

**10.** Turbomaschine (TR), umfassend:

- eine Vorrichtung (1) zum Überwachen nach einem der Ansprüche 7 bis 9 und
- einen Schwingungssensor (3A), der sich an einer feststehenden Komponente der Turbomaschine befindet und dazu geeignet ist, ein Schwingungsbeschleunigungssignal an die Vorrichtung zum Überwachen zu liefern.

## Claims

**1.** A method of monitoring twisting vibration of a rotary shaft (ABP) of a turbine engine (TR), the method comprising:

• a step (E10) of obtaining a vibratory acceleration signal from an accelerometer (3A) located on a stationary component of the turbine engine, this vibratory signal being **characterized by** a carrier frequency;
• a step (E20) of evaluating a frequency spectrum of the vibratory signal;
• a step (E30, E40) of searching for a pair of spectral lines of amplitudes greater than at least a first threshold, the lines being distributed in the spectrum on either side of the carrier frequency of the vibratory signal, and spaced apart therefrom by a twisting frequency of the shaft; and
• if a pair of spectral lines of amplitudes greater than said at least one first threshold is detected, a step (E160) of issuing a warning message.

**2.** A monitoring method according to claim 1, further comprising:

• a step (E100) of evaluating an envelope signal of the vibratory signal;
• a step (E110) of evaluating a frequency spectrum of the envelope signal;
• a search step (E120) of searching for at least one spectral line in the spectrum of the envelope signal that has an amplitude greater than a second threshold, and that exists at a multiple of the twisting frequency of the shaft; and
• a step (E130, E150) of estimating a confidence level associated with the warning message as a function of the result of the search step (E120).

**3.** A monitoring method according to claim 2, **characterized in that** during the step of evaluating the envelope signal, the envelope signal is obtained from a Hilbert transform of the vibratory signal.

**4.** A monitoring method according to any one of claims 1 to 3, further comprising:

• a search step (E70) of searching for at least one other pair of spectral lines distributed in the spectrum of the vibratory signal on either side of the carrier frequency and spaced apart therefrom by a multiple of the twisting frequency of the shaft; and
• a step (E90) of estimating a level of severity associated with the warning message, this level of severity depending on the number of pairs of lines that are found in the search step (E70) and that are of amplitudes that exceed at least a third threshold.

**5.** A computer program including instructions for executing the steps of the monitoring method according to any one of claims 1 to 4 when said program is executed by a computer.

**6.** A computer readable recording medium having recorded thereon a computer program including instructions for executing the steps of the monitoring method according to any one of claims 1 to 4.

**7.** A monitoring device (1) for monitoring twisting vibration of a rotary shaft (ABP) of a turbine engine (TR), the device comprising:

• obtaining means (11) for obtaining a vibratory acceleration signal from an accelerometer (3A) located on a stationary component of the turbine engine, the vibratory signal being **characterized by** a carrier frequency;
• evaluation means (11) for evaluating a frequency spectrum of the vibratory signal;
• search means (11) for searching for a pair of spectral lines of amplitudes greater than at least a first threshold, the lines being distributed in the spectrum on either side of the carrier frequency of the vibratory signal, and spaced apart therefrom by a twisting frequency of the shaft; and
• issuing means (14, 15) for issuing a warning message activated if a pair of spectral lines of amplitudes greater than said at least one first threshold is detected.

**8.** A monitoring device (1) according to claim 7, and further comprising:

• evaluation means (11) for evaluating an envelope signal of the vibratory signal;
• evaluation means (11) for evaluating a frequency spectrum of the envelope signal;
• search means (11) for searching for at least one spectral line in the spectrum of the envelope signal that is of an amplitude greater than a second threshold, and that is at a multiple of the twisting frequency of the shaft; and
• estimator means (11) for estimating a confidence level associated with the warning message, as a function of the result of the search.

**9.** A monitoring device (1) according to claim 7 or claim 8, further comprising:

• search means for searching for at least one other pair of spectral lines distributed in the spectrum of the vibratory signal on either side of the carrier frequency, and spaced apart therefrom by a multiple of the twisting frequency of the shaft; and
• estimator means (11) for estimating a severity level associated with the warning message, the severity level depending on the number of pairs that are found by the search means and that are of amplitudes that exceed at least a third threshold.

**10.** A turbine engine (TR) including:

• a monitoring device (1) according to any one of claims 7 to 9; and
• an accelerometer (3A) located on a stationary component of the turbine engine and adapted to deliver a vibratory acceleration signal to the monitoring device.

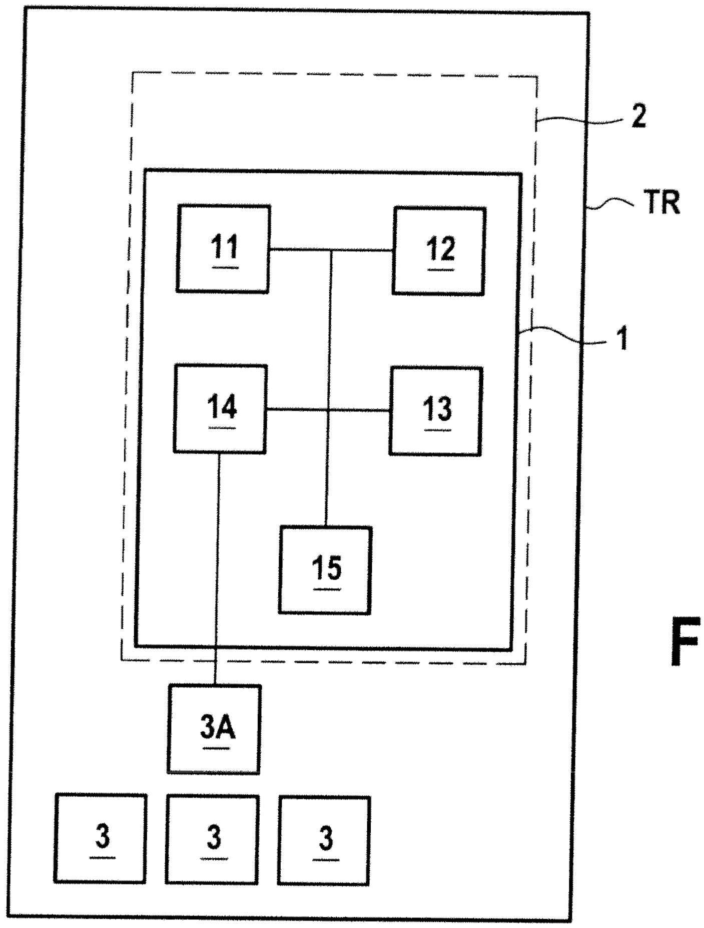
2
TR
1
11
12
14
13
15
3A
3
3
3

FIG.1

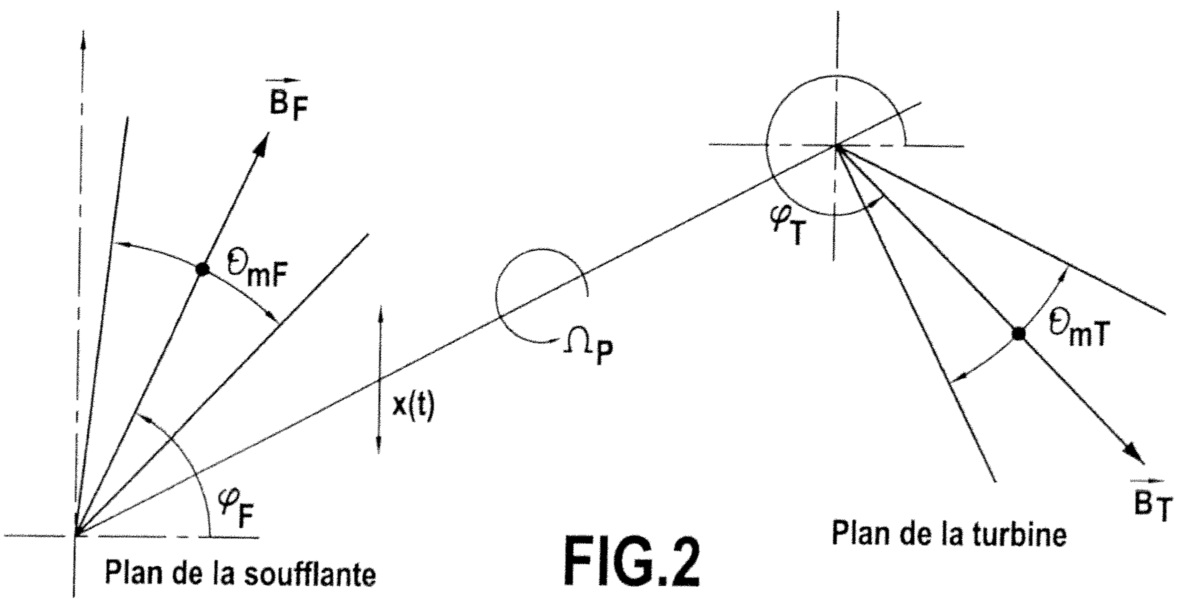
$\vec{B}_F$
$\theta_{mF}$
$\varphi_F$
x(t)
$\Omega_P$
$\varphi_T$
$\theta_{mT}$
$\vec{B}_T$
Plan de la soufflante
Plan de la turbine

FIG.2

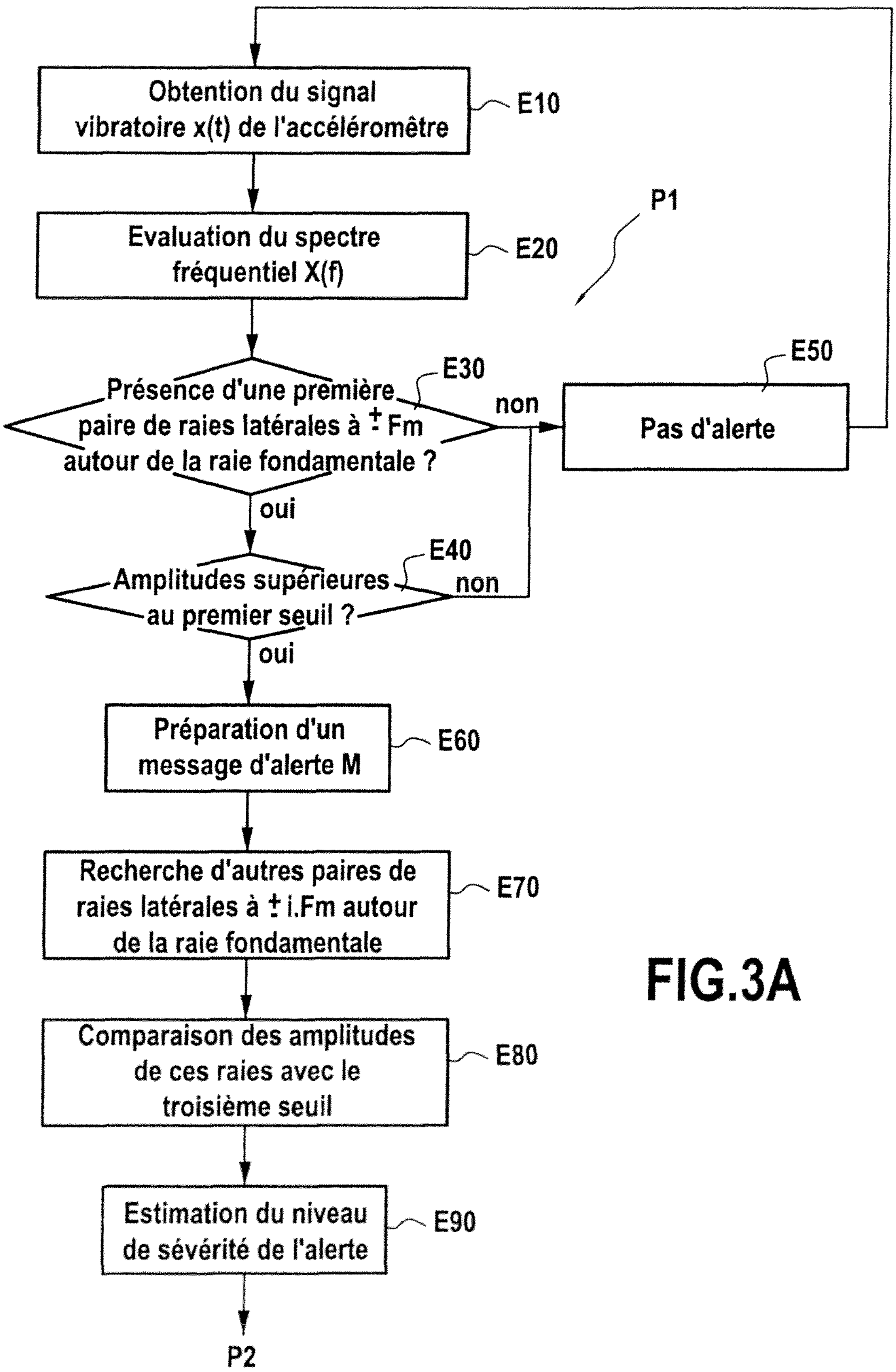
Obtention du signal vibratoire x(t) de l'accéléromètre
E10
Evaluation du spectre fréquentiel X(f)
E20
P1
Présence d'une première paire de raies latérales à ± Fm autour de la raie fondamentale ?
E30
non
oui
E50
Pas d'alerte
Amplitudes supérieures au premier seuil ?
E40
non
oui
Préparation d'un message d'alerte M
E60
Recherche d'autres paires de raies latérales à ± i.Fm autour de la raie fondamentale
E70
Comparaison des amplitudes de ces raies avec le troisième seuil
E80
Estimation du niveau de sévérité de l'alerte
E90
P2

FIG.3A

FIG.3B

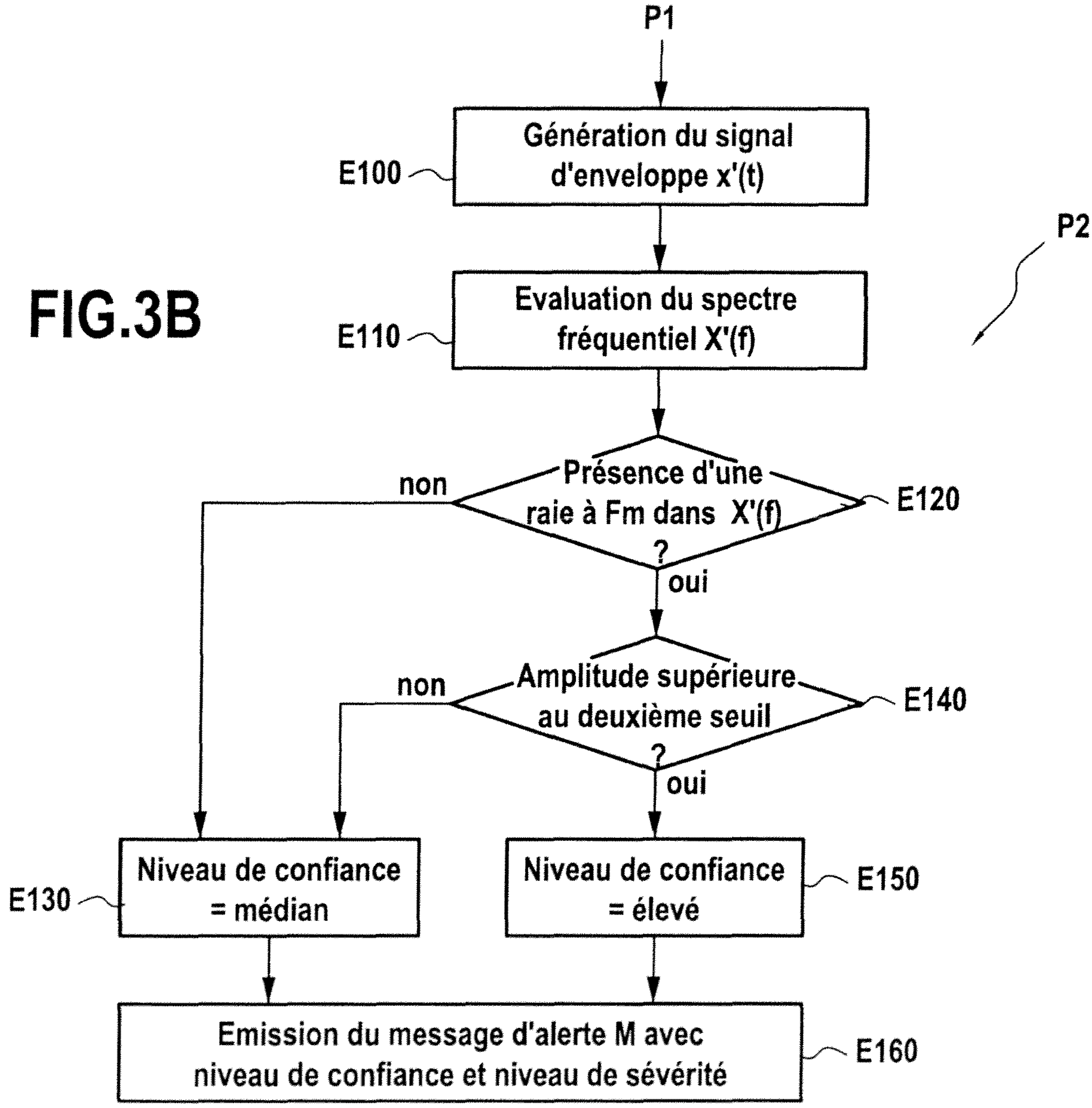
P1
Génération du signal d'enveloppe x'(t)
E100
Evaluation du spectre fréquentiel X'(f)
E110
P2
Présence d'une raie à Fm dans X'(f) ?
E120
non
oui
Amplitude supérieure au deuxième seuil ?
E140
non
oui
Niveau de confiance = médian
E130
Niveau de confiance = élevé
E150
Emission du message d'alerte M avec niveau de confiance et niveau de sévérité
E160

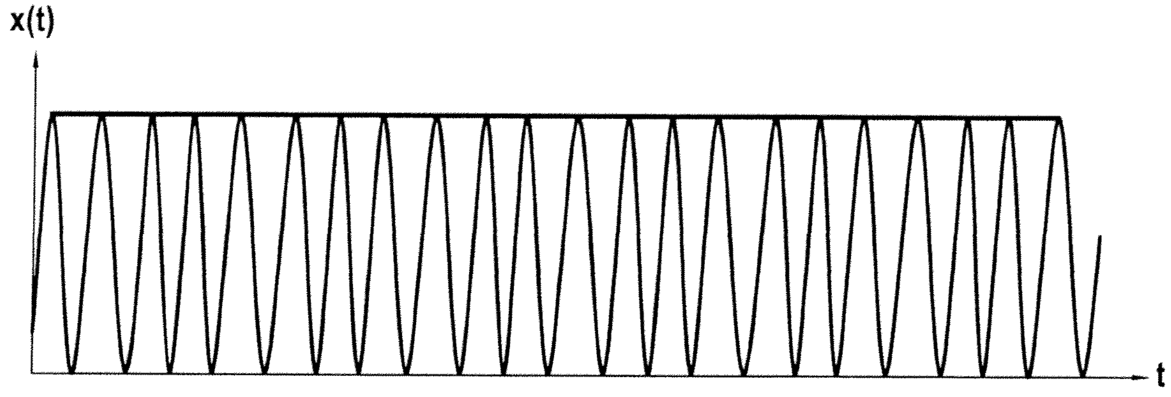


FIG.4A

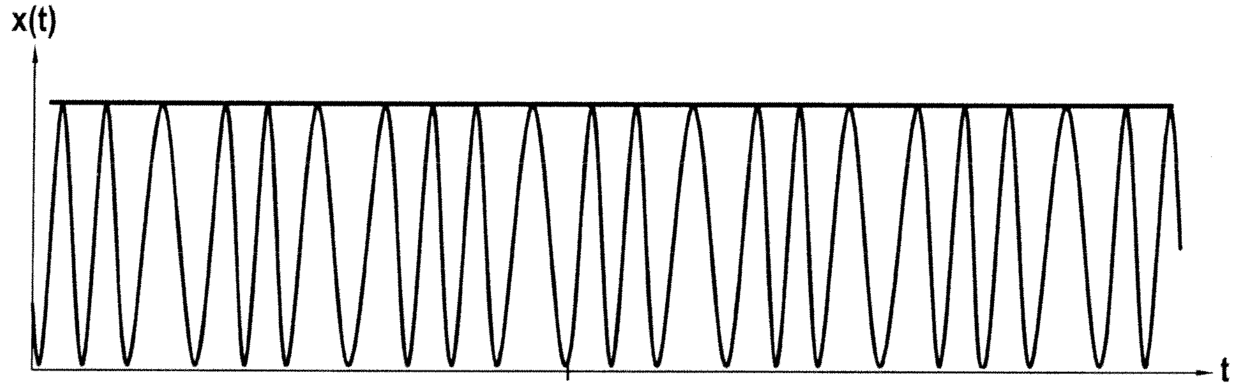


FIG.4B

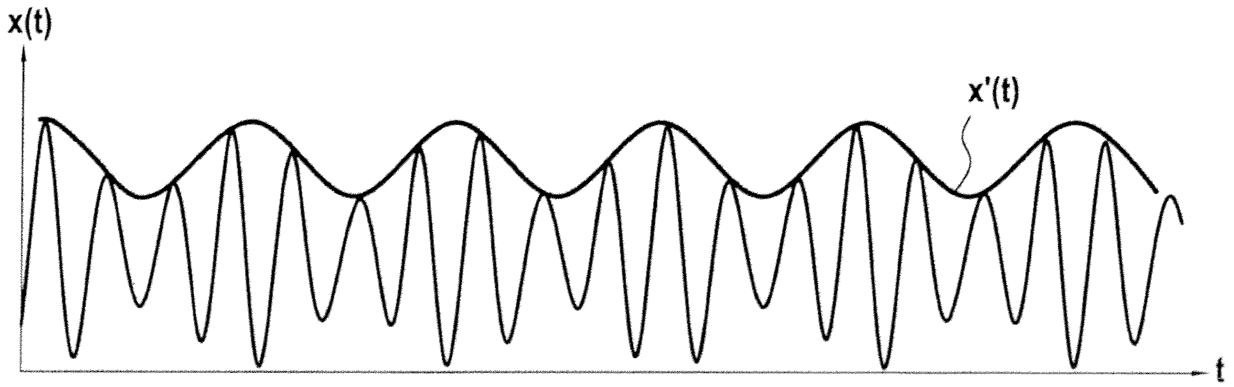


FIG.4C

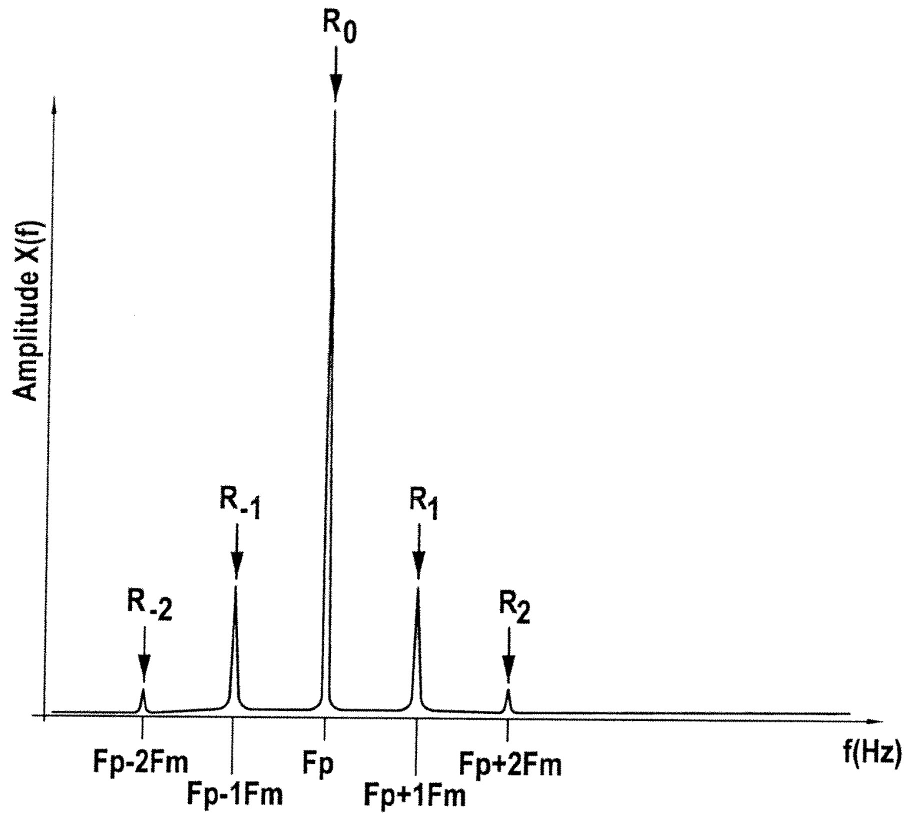
R0
Amplitude X(f)
R-1
R1
R-2
R2
Fp-2Fm
Fp-1Fm
Fp
Fp+1Fm
Fp+2Fm
f(Hz)

FIG.5A

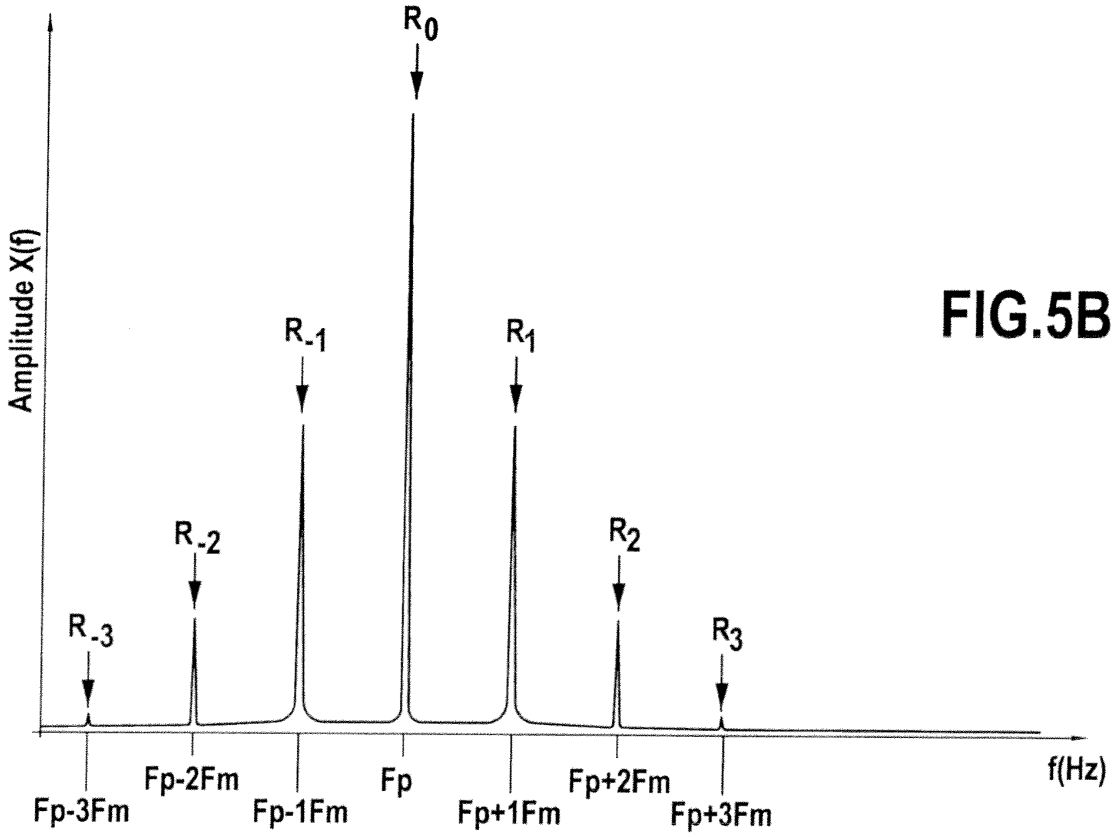
R0
Amplitude X(f)
R-1
R1
R-2
R2
R-3
R3
Fp-3Fm
Fp-2Fm
Fp-1Fm
Fp
Fp+1Fm
Fp+2Fm
Fp+3Fm
f(Hz)

FIG.5B

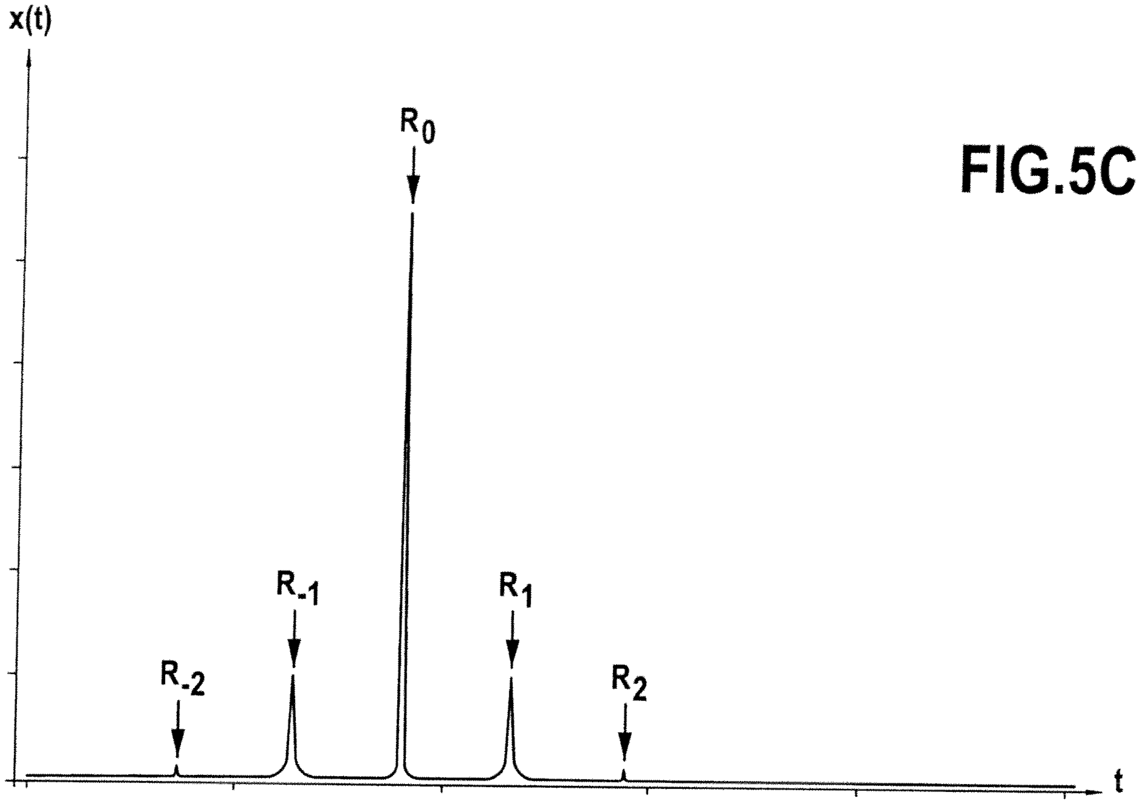


FIG.5C

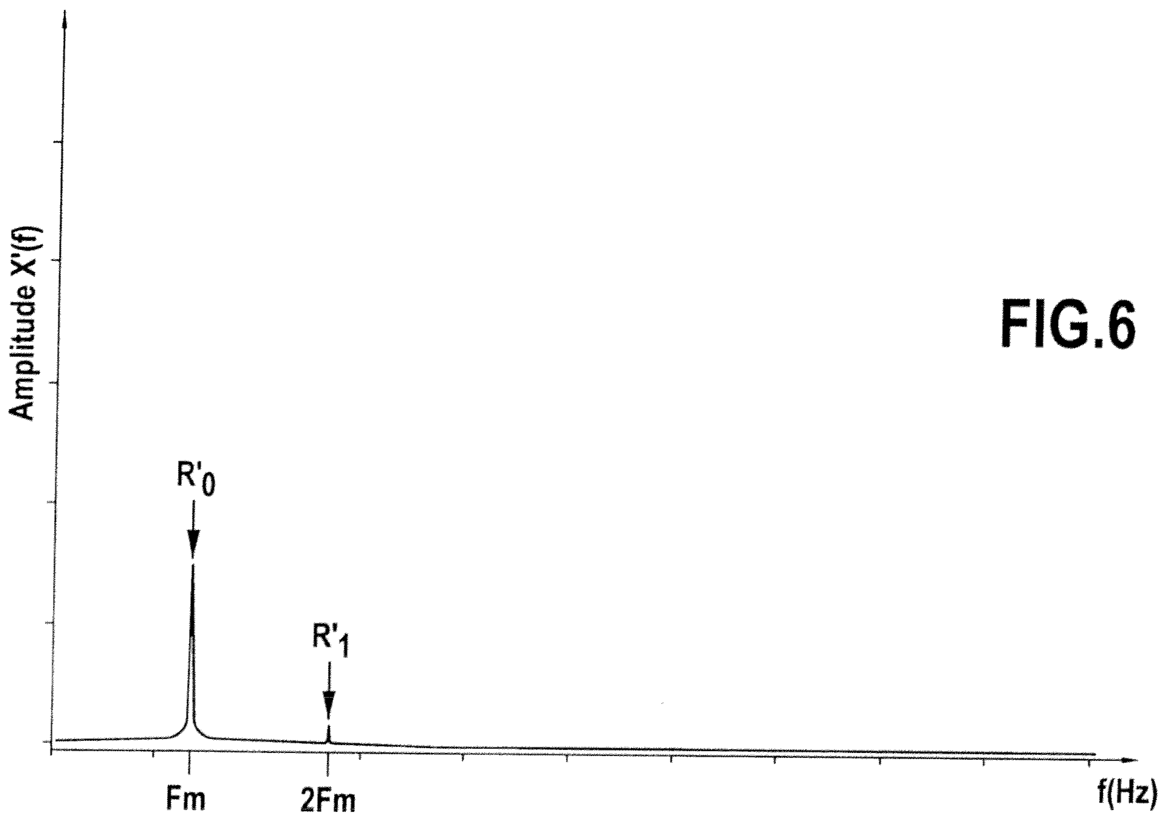


FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9605486 A